# FASCICULE DE BREVET EUROPEEN

(11) **EP 3 898 325 B1**
(45) Date de publication et mention de la délivrance du brevet: **08.02.2023**
(21) Numéro de dépôt: 19848932.0
(22) Date de dépôt: 20.12.2019
(51) Int. Cl.: B60P 3/07, B62D 65/18

(54) **CONVOYEUR POUR LE DÉPLACEMENT DE VÉHICULES À QUATRE ROUES**
FÖRDERER ZUM BEWEGEN VON VIERRÄDRIGEN FAHRZEUGEN
CONVEYOR FOR MOVING FOUR-WHEELED VEHICLES

(30) Priorité: 20.12.2018 FR 1873632; 14.06.2019 FR 1906392
(43) Date de publication de la demande: 27.10.2021
(73) Titulaire: Stanley Robotics, 78000 Versailles (FR)
(72) Inventeur: CORD, Aurélien, 75014 Paris (FR); BOUSSARD, Clément, 75001 Paris (FR)
(74) Mandataire: IP Trust
(86) Numéro de dépôt international: PCT/FR2019/053228
(87) Numéro de publication internationale: WO 2020/128380

(56) Documents cités:
- CN-A- 108 166 819
- CN-A- 108 612 373
- FR-A1- 3 036 349

## Description

### Domaine de l'invention

La présente invention concerne le domaine des équipements autonomes pour le convoyage de véhicules sans l'aide d'un conducteur et sans faire rouler le véhicule sur ses roues, par exemple pour le déplacement entre un point de dépose de véhicules et une zone de stationnement de véhicules, ou entre une sortie de chaîne de fabrication automobile et un espace de stockage par exemple sur le site d'un constructeur, d'un distributeur ou d'un concessionnaire automobile.

De tels convoyeurs sont conçus pour permettre de charger un véhicule sans intervention du conducteur, le véhicule pouvant être à l'arrêt, portes verrouillées. Les convoyeurs sont constitués par une structure longitudinale pouvant être glissée sous le véhicule. Des systèmes escamotables latéralement viennent enserrer les pneus du véhicule pour l'immobiliser par rapport à la structure longitudinale et pour soulever le véhicule pour décoller la surface de roulement des pneus par rapport au sol. Le convoyeur peut alors déplacer le véhicule qui n'a plus de contact avec le sol.

### État de la technique

On connaît dans l'état de la technique une solution de transport de véhicules, destinée principalement à des voitures privées décrite dans le brevet européen EP0292537B1. Il comprend huit blocs de levage destinés à être placés par paires des deux côtés d'une roue de véhicule respective, dans lequel une première paire et une seconde paire de blocs de levage sont comprises dans un premier ensemble de levage tandis qu'une troisième paire et une quatrième paire de blocs de levage sont comprises dans un second ensemble de levage, dans lequel le premier ensemble de levage comprend un premier chariot et en ce que le second ensemble de levage comprend un second chariot ; ces chariots étant disposés successivement l'un après l'autre, suivant une ligne (C-C) le long de laquelle un véhicule doit être entraîné sur une surface de support pour venir se placer au-dessus des chariots de façon que son axe longitudinal soit situé suivant cette ligne.

Chaque bloc de levage est muni à une extrémité d'un bras que l'on peut faire pivoter ou basculer autour d'un axe relié aux chariots respectifs pour passer d'une position basculée vers l'intérieur dans laquelle les bras respectifs et les blocs de levage respectifs sont situés parallèlement ou pratiquement parallèlement à la ligne (C-C), à une position basculée vers l'extérieur perpendiculaire ou pratiquement perpendiculaire à la position basculée vers l'intérieur, dans laquelle chaque paire de blocs de levage est destinée à être entraînée pour passer de sa position basculée vers l'intérieur à sa position basculée vers l'extérieur, ce qui permet ainsi aux blocs de levage de venir se placer au-dessous d'une roue de véhicule respective des deux côtés de celle-ci, pour soulever ainsi la roue, la distance entre les deux paires de blocs de levage de chaque chariot dans la position basculée vers l'extérieur de ces paires de blocs, correspondant à l'espacement ou écartement des roues d'un véhicule à soulever.

On connaît aussi le brevet français FR3036349 décrivant un convoyeur pour le déplacement de véhicules à quatre roues, comprenant un châssis muni de prolongements escamotables mobiles entre une position dans laquelle ils permettent le déplacement dudit châssis sous le véhicule, et une position dans laquelle ils viennent en contact avec les bandes de roulement desdites roues, ledit châssis est télescopique et comprend deux segments portant chacun une paire de bras. L'une au moins des paires de bras est articulée pour permettre un déplacement entre une position perpendiculaire à l'axe longitudinal du châssis avec une extension au moins égale à la voie du véhicule, et une position repliée pour occuper une largeur inférieure à la distance comprise entre les flancs intérieurs des roues du véhicule. Les segments sont mobiles entre une position où les bras ne sont pas en contact avec les roues, et une position où chaque bras vient en contact avec la bande de roulement d'une desdites roues, pour assurer le relèvement ou la dépose du véhicule.

On connaît aussi la demande de brevet chinois CN108612373 décrivant un robot pour le transport constitué par un premier corps de châssis, un deuxième corps de châssis, une pluralité de groupes de roues motrices, au moins quatre groupes de mécanismes de levage de serrage, un mécanisme télescopique et un mécanisme de maintien central. Le premier corps de châssis et le second corps de châssis sont reliés par le mécanisme télescopique, et le premier corps de châssis et le deuxième corps de châssis peuvent se déplacer par rapport à la direction axiale. Les multiples groupes de roues motrices sont agencés de manière correspondante sur le premier corps de châssis et le second corps de châssis, et sont utilisés pour entraîner le robot à transporter pour le déplacer. Au moins deux groupes des mécanismes de levage de serrage sont disposés sur le premier corps de châssis et sont répartis symétriquement par rapport à un premier arbre de direction ; et au moins les deux autres groupes de mécanismes de levage de serrage sont disposés sur le deuxième corps de châssis et sont répartis symétriquement par rapport au premier arbre de direction.

On connaît aussi la demande de brevet chinois CN108166819 qui concerne un robot de stationnement, en particulier un robot de stationnement de type à serrage, et appartient au domaine technique des robots de stationnement. Le robot de stationnement de type à serrage comprend un chariot de transport avant, un chariot de transport arrière et un mécanisme de châssis coulissant télescopique. L'extrémité avant du mécanisme du châssis coulissant télescopique est connectée au chariot de transport avant, l'extrémité arrière du mécanisme du châssis coulissant télescopique est connectée au chariot de transport arrière, et le bas du chariot de transport avant et le bas du chariot de transport arrière sont chacun fournis avec un groupe de roues de marche universel. Le coin gauche et le coin droit de l'extrémité avant du chariot de transport avant sont pourvus d'un ensemble de roue de guidage porteur de radar et d'un ensemble de roue de guidage respectivement, et le coin gauche et le coin droit de l'extrémité arrière du chariot de transport arrière sont pourvus d'un ensemble de roue de guidage porteur de radar et d'un ensemble de roue de guidage respectivement. Le côté gauche et le côté droit du chariot de transport avant et le côté gauche et le côté droit du chariot de transport arrière sont chacun pourvus d'un ensemble de serrage.

### Inconvénients de l'art antérieur

Les solutions de l'art antérieur ne sont pas totalement satisfaisantes car la longueur des convoyeurs les rend peu manoeuvrant. La plateforme supportant le véhicule doit présenter une longueur au moins égale à celle du véhicule, augmentée des équipements motorisés. Le rayon de braquage est de ce fait important, ce qui est préjudiciable pour le déplacement dans un espace restreint, par exemple dans une allée formée entre deux zones de stationnement, où le véhicule convoyé doit être positionné dans une position perpendiculaire à l'axe de l'allée pour permettre ensuite l'engagement entre deux véhicules déjà stationnés par exemple.

Par ailleurs, la maintenance de tels convoyeurs soumis à un usage intensif est relativement complexe et conduit à l'immobilisation pendant des durées relativement importantes des convoyeurs en réparation.

De façon générale, les solutions de l'art antérieur manquent de fiabilité et de maniabilité pour un usage intensif dans des configurations nécessitant des déplacements très précis et parfois complexes, avec des déplacements latérales très faible pour ne pas risquer d'emboutir un véhicule déjà en stationnement, lors de l'insertion dans un espace libre d'une file entre deux files déjà occupées.

### Solution apportée par l'invention

Afin de remédier à ces inconvénients, l'invention concerne selon son acception la plus générale un convoyeur pour le déplacement de véhicules à quatre roues, comprenant un châssis télescopique muni de bras de calage des pneus mobiles entre une position escamotée et une position dans laquelle ils viennent en contact avec les bandes de roulement desdites roues, caractérisé en ce qu'il est comprend un bloc propulseur constitué par un châssis avant sur lequel sont fixés deux sous-ensembles latéraux comportant chacun une roue motorisée et directionnelle orientable indépendamment l'une de l'autre et un moyen d'accouplement dudit châssis télescopique avec ledit châssis avant.

Selon une première variante, ledit moyen d'accouplement entre ledit châssis avant et ledit châssis télescopique comprend au moins une glissière verticale et un vérin motorisé commandant la position relative desdits châssis selon l'axe vertical.

Selon une deuxième variante, ledit châssis télescopique est formé par un premier caisson proximal creux d'une épaisseur inférieure à 100 millimètres à l'intérieur duquel coulisse un second caisson distal dont l'extension est motorisée, ledit caisson distal comportant une roulette d'une section inférieure à 100 millimètres reliée audit second caisson par un coussin de levage.

Avantageusement, ledit premier caisson proximal creux est formé par un cadre rigide refermé à sa face supérieure par des plaques démontables.

De préférence, ledit premier caisson est fermé de manière étanche.

Selon une autre variante, ledit châssis avant comporte un tiroir extractible pour le logement d'une batterie électrique.

Selon une autre variante, ledit châssis avant comporte un tiroir extractible pour le logement des circuits électroniques, ledit tiroir comportant des connectiques sur sa face arrière complémentaires de connectiques prévues sur le fond du châssis avant.

Avantageusement, ledit châssis avant présente des moyens signalétiques commandés en fonction des déplacements du convoyeur.

Selon un mode de réalisation particulier, lesdits moyens signalétiques assurent une projection lumineuse sur le sol en avant du convoyeur.

Selon un autre mode de réalisation, ledit bâti avant comporte un capteur de type LIDAR présentant une ouverture verticale comprise entre 30 et 60° et un balayage sur 360° à l'avant et sur 180° à l'arrière.

### Description détaillée de l'invention'

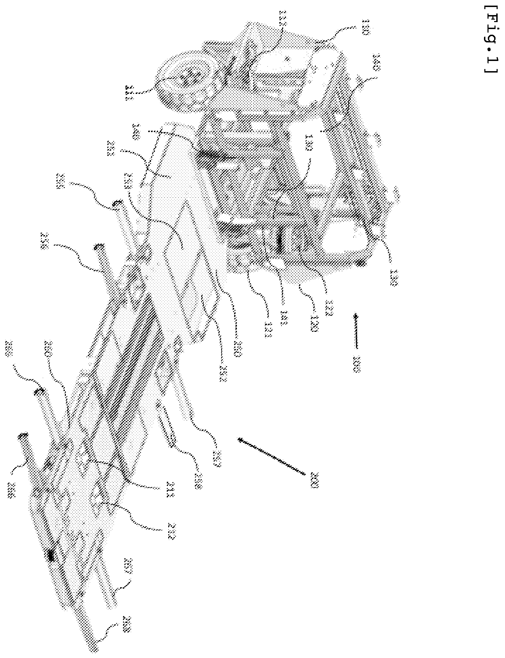

La présente invention sera mieux comprise à la lecture de la description qui suit, se référant à un exemple non limitatif de réalisation illustré par le dessin annexé où
[Fig.1] la figure 1 représente une vue de dessus, de trois-quarts arrière d'un convoyeur selon l'invention.

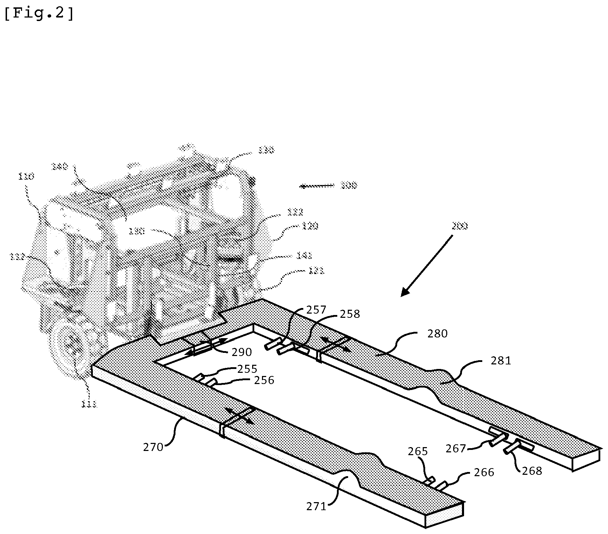

[Fig.2] la figure 2 représente une variante de réalisation.

### Description de l'architecture générale

Le convoyeur est constitué d'un bloc propulseur (100), et d'un plateau de convoyage (200). Le bloc propulseur (100) est constitué par un châssis rigide réalisé par assemblage de poutres métalliques.

Le plateau de convoyage (200) est relié au bloc propulseur (100) par l'intermédiaire d'un système de réglage en hauteur (130) actionné par un vérin électrique ou pneumatique.

Le bloc propulseur (100) est équipé de deux roues motorisées (111, 121). Le plateau de convoyage (200) est équipé de galets de roulement (211, 212) supportés par un système de réglage en hauteur.

### Description du bloc propulseur

Le bloc propulseur (100) est constitué par un ensemble modulaire facilement démontable pour simplifier la maintenance. L'ensemble peut être retiré et remplacé par le débranchement d'un connecteur électrique et du dévissage des boulons de liaison de la platine avec le châssis (130).

Le châssis tubulaire (130) sert de support d'assemblage des différents éléments modulaires qui sont montés par vissage de façon à pouvoir remplacer des blocs fonctionnels très rapidement et par des opérations simples.

Chaque roue motorisée (111, 121) est montée sur un bloc fonctionnel moto-directeur (110, 120) formé par une platine métallique qui est vissée sur le côté du châssis (130) et qui comprend un moteur ou un actionneur (112, 122) commandant l'orientation de la roue respectivement (111, 121) par l'intermédiaire d'un axe vertical sur lequel est fixé le stator de la roue motorisée respectivement (111, 121). La roue motorisée (111, 121) est avantageusement constituée par une jante formant le rotor d'une machine électrique dont le stator est fixé sur l'axe directionnel entraîné par le moteur ou un actionneur (112, 122).

Chacun des blocs fonctionnels moto-directeur (110, 120) est indépendant. L'orientation angulaire de la roue motorisée gauche (111) est commandée indépendamment de l'orientation angulaire de la roue motorisée droite (112). De même, la vitesse et le sens de rotation de la roue motorisée gauche (111) sont commandée indépendamment de la vitesse et du sens de la rotation la roue motorisée droite (112).

Le châssis (130) définit aussi un espace (140) pour le logement des batteries électriques qui sont montées sur un tiroir extractible pour faciliter le remplacement, ainsi que les équipements pneumatiques, électriques et électroniques également montés sur un tiroir extractible pour faciliter leur remplacement en cas de défaillance. Les tiroirs extractibles présentent sur leur face arrière un ou plusieurs connecteurs assurant le raccordement et découplage automatique des batteries et/ou circuits électriques et électroniques en fonction de l'insertion ou du retrait du tiroir.

Le châssis (130) supporte également un module pneumatique assurant le fonctionnement des éléments pneumatiques du plateau (200).

Le châssis supporte également à sa partie inférieure une bobine électrique pour la recharge par induction des batteries, à partir d'une station de recharge dont le sol est équipé d'une bobine électrique complémentaire.

Alternativement, le bloc propulseur (100) comporte une pile à hydrogène.

Le châssis comporte également un système de levage du plateau proximal (250) comprenant des vérins électriques (140, 141) commandant le positionnement en hauteur de l'accrochage du plateau (250) au bloc propulseur (100).

Le bloc propulseur (100) comporte optionnellement un moyen de géolocalisation, par exemple un module GPS ou un module de triangulation radiofréquence, ainsi qu'un lidar positionné au sommet d'un mat pour l'acquisition des informations sur l'environnement du convoyeur.

Le bloc propulseur (100) comporte un carrossage, par exemple en matière plastique moulé fixé sur le châssis (130), présentant des volets d'accès aux tiroirs. Il présente aussi des moyens de signalisation sous forme d'afficheurs ou de feux de signalisation, ou encore de moyens de projection lumineux à l'avant du bloc propulseur (100), projetant sur le sol une information graphique représentative du sens et de la direction du déplacement présent ou à venir, ou encore s'affichant sur un écran disposé sur la carrosserie du bloc avant.

### Plateau de convoyage (200)

Le plateau de convoyage (200) est constitué d'un plateau proximal (250) et d'un plateau distal (260).

Le plateau proximal (250) est formé par un caisson creux réalisé par un assemblage de poutres fermées par des plaques métalliques (251 à 253), les plaques (252, 253) masquant des trappes de visite.

Ce plateau proximal (250) présente une première paire de bras fixes (255 et 257) et une première paire de bras escamotables (256 et 258) actionnés électriquement ou pneumatiquement, pouvant se rabattre contre les flancs latéraux du caisson, ou s'étendre perpendiculairement aux flancs latéraux pour venir en contact avec les bandes de roulement des roues du véhicule à déplacer.

Le plateau de convoyage (200) comprend en outre un plateau distal (260) relié au plateau proximal (250) par une glissière longitudinale et un vérin pneumatique ou un vérin électrique permettant d'ajuster l'extension longitudinale et l'adapter à la taille du véhicule.

Ce plateau distal (260) présente également une paire de bras fixes (265, 267) et une paire de bras escamotables (266, 268) actionnés électriquement ou pneumatiquement, pouvant se rabattre contre les flancs latéraux du caisson, ou s'étendre perpendiculairement aux flancs latéraux pour venir en contact avec les bandes de roulement des roues du véhicule à déplacer.

Le plateau distal (260) présente des galets (211, 212) non motorisés supportés par un moyen d'ajustage de la hauteur par rapport au châssis du plateau distal (260), par exemple par un coussin pneumatique.

Les galets (211, 212) sont disposés de part et d'autre de l'axe médian du plateau distal (260). Chaque train de galet (211, 212) est relié au châssis par un coussin pneumatique.

Le coussin pneumatique droit communique par un conduit d'air avec le coussin pneumatique gauche, ce qui assure un auto-équilibrage des trains de galets droit et gauche.

### Cinématique

L'utilisation du convoyeur est la suivante :
Dans un premier temps, le convoyeur se déplace en marche arrière vers le véhicule. Les deux bras non escamotables (255, 257) les plus proches du bloc propulseur (100) sont étendus transversalement, les autres bras escamotables (254, 258, 264 à 268) étant rabattus contre le flanc des plateaux (250, 260).

Lorsque les bras non escamotables (255, 257) viennent en contact avec les bandes de roulement des pneus du véhicule, un capteur commande l'arrêt du déplacement du bloc propulseur (100).

On déplace ensuite les deux autres bras escamotables (256, 258) du plateau proximal (250) pour bloquer les pneus.

On déploie ensuite les bras escamotables (265, 267) du plateau distal (260), le plus proche du plateau proximal (250) et on commande le déplacement du plateau distal (260) jusqu'à ce que ces bras escamotables (265, 267) viennent en contact avec les pneus des deux autres roues du véhicule.

On arrête alors le déplacement du plateau distal (260) et on verrouille la glissière, et on commande le basculement en position transversale des deux autres bras escamotables (266, 268) du plateau distal (260) pour bloquer les pneus.

Le véhicule est ainsi immobilisé sur le plateau (200). On procède alors au levage du plateau distal (260) par rapport aux galets (211, 212) et au levage du plateau proximal (250) par rapport au bloc propulseur (100), avec une amplitude de déplacement d'environ 150 millimètres, typiquement entre 80 et 200 millimètres.

### Variante de réalisation

Selon une variante de réalisation, le plateau de convoyage (200) est constitué de deux longerons (270, 280) écartés latéralement d'une largeur correspondant à la distance entre les flancs extérieures des pneus de la voiture.

Cette distance peut être ajustable par un mécanisme (290) d'ajustement de la distance entre les deux longerons (270, 280) par des vérins ou des moyens électromécaniques.

Les deux longerons (270, 280) sont dans l'exemple décrit télescopiques, et présentent à cet effet des vérins ou moyens électromagnétiques pour modifier la distance longitudinale entre les deux zones de maintien des roues.

Chaque longerons (270, 280) présente deux paires de bras (255, 256 ; 265, 266 ; 257, 258 ; 267, 268) formant chacune une pince pour maintenir la partie inférieure de la bande de roulement d'un pneu. Les paires de bras sont orientées en position active vers le centre du plateau (200).

Les deux bras (255, 257) les plus proches du bloc propulseur (100) sont fixes. Les autres bras sont rabattables entre une position escamotée dans laquelle ils sont repliés à l'intérieur de la structure du longerons (270, 280) et une position active où ils sont déployés à l'intérieur de l'espace délimité par les deux longerons (270, 280), pour assurer le maintien des roues d'un véhicule à déplacer.

Les longerons (270, 280) présentent des logements (271, 281) pour recevoir une roue associée à un vérin ou un coussin pneumatique permettant d'ajuster la hauteur du longeron (270, 280) par rapport au sol, et décoller la surface de roulement du pneu par rapport au sol.

## Revendications

1. Convoyeur pour le déplacement de véhicules à quatre roues, comprenant un châssis télescopique (200) muni de bras de calage des pneus mobiles entre une position escamotée et une position dans laquelle ils viennent en contact avec les bandes de roulement desdites roues, **caractérisé en ce qu'**il comprend en outre un bloc propulseur (100) constitué par un châssis avant sur lequel sont fixés deux sous-ensembles latéraux (110, 120) comportant chacun une roue motorisée et directionnelle (111, 121) orientable indépendamment l'une de l'autre et un moyen d'accouplement dudit châssis télescopique (200) avec ledit châssis avant.

2. Convoyeur selon la revendication 1 **caractérisé en ce que** ledit moyen d'accouplement entre ledit châssis avant et ledit châssis télescopique (200) comprend au moins une glissière verticale et un vérin motorisé commandant la position relative desdits châssis (200) selon l'axe vertical.

3. Convoyeur selon la revendication 1 **caractérisé en ce que** ledit châssis télescopique (200) est formé par un premier caisson proximal creux d'une épaisseur inférieure à 100 millimètres à l'intérieur duquel coulisse un second caisson distal dont l'extension est motorisée, ledit caisson distal comportant une roulette d'une section inférieure à 100 millimètres reliée au dit second caisson par un coussin de levage.

4. Convoyeur selon la revendication précédente **caractérisé en ce que** ledit premier caisson proximal creux est formé par un cadre rigide refermé à sa face supérieure par des plaques démontables.

5. Convoyeur selon les revendications 3 et 4 **caractérisé en ce que** ledit premier caisson est fermé de manière étanche.

6. Convoyeur selon la revendication 1 **caractérisé en ce que** ledit châssis avant comporte un tiroir extractible pour le logement d'une batterie électrique.

7. Convoyeur selon la revendication 1 **caractérisé en ce que** ledit châssis avant comporte un tiroir extractible pour le logement des circuits électroniques, ledit tiroir comportant des connectiques sur sa face arrière complémentaires de connectiques prévues sur le fond du châssis avant.

8. Convoyeur selon la revendication 1 **caractérisé en ce que** ledit châssis avant présente des moyens signalétiques commandés en fonction des déplacements du convoyeur.

9. Convoyeur selon la revendication précédente **caractérisé en ce que** lesdits moyens signalétiques assurent une projection lumineuse sur le sol en avant du convoyeur ou sur un écran disposé sur la face avant du bloc de propulsion.

10. Convoyeur selon la revendication 1 **caractérisé en ce que** ledit châssis avant comporte un capteur de type LIDAR présentant une ouverture verticale comprise entre 30 et 60° et un balayage sur 360° à l'avant et sur 180° à l'arrière.

11. Convoyeur selon la revendication 1 **caractérisé en ce que** ledit châssis télescopique (200) comprend un plateau de convoyage (200) qui est constitué de deux longerons (270, 280) écartés latéralement d'une largeur correspondant à la distance entre les flancs extérieures des pneus de la voiture.

12. Convoyeur selon la revendication 11 **caractérisé en ce que** ledit plateau de convoyage (200) comprend un mécanisme (290) d'ajustement de la distance entre les deux longerons (270, 280) par des vérins ou des moyens électromécaniques.

13. Convoyeur selon la revendication 11 **caractérisé en ce que** les deux longerons (270, 280) sont télescopiques et présentent des vérins ou moyens électromagnétiques pour modifier la distance longitudinale entre les deux zones de maintien des roues.

14. Convoyeur selon la revendication 11 **caractérisé en ce que** chaque longerons (270, 280) présente deux paires de bras (255, 256 ; 265, 266 ; 257, 258 ; 267, 268) formant chacune une pince pour maintenir la partie inférieure de la bande de roulement d'un pneu, lesdites paires de bras étant orientées en position active vers le centre dudit plateau (200).

15. Convoyeur selon la revendication 11 **caractérisé en ce que** lesdits longerons (270, 280) présentent des logements (271, 281) pour recevoir une roue associée à un vérin ou un coussin pneumatique permettant d'ajuster la hauteur du longeron (270, 280) par rapport au sol, et décoller la surface de roulement du pneu par rapport au sol.

## Patentansprüche

1. Beförderer zum Bewegen von vierrädrigen Fahrzeugen, umfassend ein ausziehbares Gestell (200), das mit Armen zum Feststellen von Reifen versehen ist, die zwischen einer eingefahrenen Stellung und einer Stellung, in der sie mit den Laufflächen der Räder in Kontakt kommen, bewegbar sind, **dadurch gekennzeichnet, dass** er ferner eine Antriebseinheit (100) umfasst, bestehend aus einem Vordergestell, an dem zwei seitliche Unterbaugruppen (110, 120) befestigt sind, die jeweils ein von dem anderen unabhängig ausrichtbares motorisiertes und lenkbares Rad (111, 121) und ein Mittel zum Verkuppeln des ausziehbaren Gestells (200) mit dem Vordergestell umfassen.

2. Beförderer nach Anspruch 1, **dadurch gekennzeichnet, dass** das Mittel zum Verkuppeln zwischen dem Vordergestell und dem ausziehbaren Gestell (200) mindestens einen vertikalen Schlitten und ein motorisiertes Stellelement umfasst, durch das die relative Stellung der Gestelle (200) entlang der vertikalen Achse gesteuert wird.

3. Beförderer nach Anspruch 1, **dadurch gekennzeichnet, dass** das ausziehbare Gestell (200) durch einen ersten hohlen proximalen Kasten mit einer Dicke von weniger als 100 Millimeter gebildet wird, in dessen Innerem ein zweiter distaler Kasten gleitet, dessen Verlängerung motorisiert ist, wobei der distale Kasten eine Rolle mit einem Querschnitt von weniger als 100 Millimeter aufweist, die mit dem zweiten Kasten durch ein Hebekissen verbunden ist.

4. Beförderer nach dem vorhergehenden Anspruch, **dadurch gekennzeichnet, dass** der erste hohle proximale Kasten aus einem starren Rahmen gebildet ist, der an seiner Oberseite durch abnehmbare Scheiben wieder geschlossen wird.

5. Beförderer nach Ansprüchen 3 und 4, **dadurch gekennzeichnet, dass** der erste Kasten abgedichtet geschlossen ist.

6. Beförderer nach Anspruch 1, **dadurch gekennzeichnet, dass** das Vordergestell ein herausziehbares Fach zum Aufnehmen einer elektrischen Batterie aufweist.

7. Beförderer nach Anspruch 1, **dadurch gekennzeichnet, dass** das Vordergestell ein ausziehbares Fach zum Aufnehmen von elektronischen Schaltungen aufweist, wobei das Fach auf seiner Rückseite Anschlüsse umfasst, die zu an der Rückwand des Vordergestells vorgesehenen Anschlüssen komplementär sind.

8. Beförderer nach Anspruch 1, **dadurch gekennzeichnet, dass** das Vordergestell Signalisierungsmittel vorweist, die in Abhängigkeit von Bewegungen des Beförderers gesteuert werden.

9. Beförderer nach dem vorhergehenden Anspruch, **dadurch gekennzeichnet, dass** die Signalisierungsmittel eine Lichtprojektion auf den Boden vor dem Beförderer oder auf eine an der Vorderseite der Antriebseinheit angeordnete Projektionsfläche gewährleisten.

10. Beförderer nach Anspruch 1, **dadurch gekennzeichnet, dass** das Vordergestell einen Sensor vom Typ LIDAR, der eine vertikale Öffnung zwischen 30 und 60° und eine Abtastung um 360° nach vorn und um 180° nach hinten vorweist, aufweist.

11. Beförderer nach Anspruch 1, **dadurch gekennzeichnet, dass** das ausziehbare Gestell (200) eine Beförderungsplatte (200) umfasst, die aus zwei Längsträgern (270, 280) besteht, die seitlich um eine Breite getrennt sind, die dem Abstand zwischen den Seitenwänden der Reifen des Fahrzeugs entspricht.

12. Beförderer nach Anspruch 11, **dadurch gekennzeichnet, dass** die Beförderungsplatte (200) einen Mechanismus (290) zum Einstellen des Abstands zwischen den zwei Längsträgern (270, 280) durch Stellelemente oder elektromechanische Mittel umfasst.

13. Beförderer nach Anspruch 11, **dadurch gekennzeichnet, dass** die zwei Längsträger (270, 280) ausziehbar sind und Stellelemente oder elektromagnetische Mittel zum Modifizieren des Längsabstands zwischen den zwei Radfixierzonen vorweist.

14. Beförderer nach Anspruch 11, **dadurch gekennzeichnet, dass** jeder Längsträger (270, 280) zwei Paar Arme (255, 256; 265, 266; 257, 258; 267, 268) vorweist, die jeweils eine Klemme zum Fixieren des unteren Teils der Lauffläche eines Reifens bilden, wobei die Armpaare in ihrer aktiven Stellung zu der Mitte der Platte (200) hin ausgerichtet sind.

15. Beförderer nach Anspruch 11, **dadurch gekennzeichnet, dass** die Längsträger (270,280) Aufnahmeelemente (271, 281) zum Empfangen eines mit einem Stellelement oder einem pneumatischen Kissen verbundenen Rades vorweisen, wodurch es möglich wird, die Höhe des Längsträgers (270, 280) bezüglich des Bodens einzustellen und die Laufoberfläche des Reifens bezüglich des Bodens abzulösen.

## Claims

1. Conveyor for moving four-wheeled vehicles, comprising a telescopic frame (200) provided with tire-chock arms movable between a retracted position and a position in which they engage with the treads of said wheels, **characterized in that** it further comprises a propulsion unit (100) made up of a front frame to which two lateral subunits (110, 120) are secured, each comprising a motorized and directional wheel (111, 121) which can be oriented independently of one another and a means for coupling said telescopic frame (200) with said front frame.

2. Conveyor according to claim 1, **characterized in that** said coupling means between said front frame and said telescopic frame (200) comprises at least one vertical slide and a motorized cylinder controlling the relative position of said frames (200) along the vertical axis.

3. Conveyor according to claim 1, **characterized in that** said telescopic frame (200) is formed by a first hollow proximal box with a thickness of less than 100 millimeters inside which slides a second distal box, the extension of which is motorized, said distal box comprising a caster that has a cross section of less than 100 millimeters and is connected to said second box by a lift pad.

4. Conveyor according to the preceding claim, **characterized in that** said first hollow proximal box is formed by a rigid framework closed at its upper face by removable plates.

5. Conveyor according to claims 3 and 4, **characterized in that** said first box is closed in a sealed manner.

6. Conveyor according to claim 1, **characterized in that** said front frame comprises an extractable drawer for housing an electric battery.

7. Conveyor according to claim 1, **characterized in that** said front frame comprises an extractable drawer for housing electronic circuits, said drawer comprising connectors on its rear face which are complementary to connectors provided on the bottom of the front frame.

8. Conveyor according to claim 1, **characterized in that** said front frame has signaling means controlled in accordance with the movements of the conveyor.

9. Conveyor according to the preceding claim, **characterized in that** said signaling means provide a light projection on the ground in front of the conveyor or on a screen arranged on the front face of the propulsion unit.

10. Conveyor according to claim 1, **characterized in that** said front frame comprises a LIDAR-type sensor having a vertical opening of between 30 and 60° and a 360° scan at the front and 180° at the rear.

11. Conveyor according to claim 1, **characterized in that** said telescopic frame (200) comprises a conveyor platform (200) which is made up of two side members (270, 280) spaced apart laterally by a width corresponding to the distance between the outer sidewalls of the tires of the vehicle.

12. Conveyor according to claim 11, **characterized in that** said conveyor platform (200) comprises a mechanism (290) for adjusting the distance between the two side members (270, 280) by cylinders or electromechanical means.

13. Conveyor according to claim 11, **characterized in that** the two side members (270, 280) are telescopic and have cylinders or electromagnetic means for changing the longitudinal distance between the two wheel holding zones.

14. Conveyor according to claim 11, **characterized in that** each of the side members (270, 280) has two pairs of arms (255, 256; 265, 266; 257, 258; 267, 268) each forming a clamp to hold the lower part of the tread of a tire, said pairs of arms being oriented in the active position toward the center of said platform (200).

15. Conveyor according to claim 11, **characterized in that** said side members (270, 280) have housings (271, 281) for receiving a wheel associated with a cylinder or a pneumatic pad making it possible to adjust the height of the side member (270, 280) relative to the ground, and loosen the tread surface of the tire relative to the ground.
